# EUROPÄISCHE PATENTANMELDUNG

(11) **EP 2 868 950 A1**
(43) Veröffentlichungstag der Anmeldung: **06.05.2015**
(21) Anmeldenummer: 14189006.1
(22) Anmeldetag: 15.10.2014
(51) Int. Cl.: F16J 15/04, F16J 15/08, H01J 49/24

(54) **Dichtfläche, insbesondere für eine Vakuumkammer eines Massenspektrometers, und Verfahren zur Herstellung einer solchen Dichtfläche**

(30) Priorität: 01.11.2013 DE 102013112070
(71) Anmelder: Vacutec Hochvakuum- & Präzisionstechnik GmbH, 28201 Bremen (DE)
(72) Erfinder: Laser, Carsten, 28844 Weyhe (DE); Laser, Bernd, 28844 Weyhe (DE)
(74) Vertreter: Wasiljeff, Johannes M.B.

(57) **Zusammenfassung**

Die Erfindung betrifft eine Dichtfläche (7, 7'), insbesondere für eine Vakuumkammer eines Massenspektrometers, und eine Herstellung dazu.

Im Stand der Technik werden ringförmige Dichtflächen mittels Drehen hergestellt. Fräsen ermöglicht zwar eine nicht-ringförmige Ausbildung, ist jedoch nachteilig bezüglich der Abdichtung. Die Aufgabe, eine Dichtfläche bereitzustellen, welche auch nicht-kreisförmige Formen annehmen kann und mit geringem Aufwand herzustellen ist, wird durch eine erfindungsgemäße Dichtfläche (7, 7') gelöst, welche umlaufende Riefen (11, 11') aufweist, die mittels Abtragen oder mittels Strahlspanen oder mittels Eindrücken hergestellt werden.

Ferner betrifft die Erfindung ein Verfahren zur Herstellung einer solchen Dichtfläche (7, 7'), ein Bauteil mit einer solchen Dichtfläche (7, 7'), eine Vakuumkammer aus Bauteilen mit solchen Dichtflächen (7, 7') und einem Massenspektrometer mit einer solchen Vakuumkammer.

## Beschreibung

Die Erfindung betrifft eine Dichtfläche, insbesondere für eine Vakuumkammer, nach Anspruch 1, ein Verfahren zur Herstellung einer solchen Dichtfläche nach Anspruch 7, ein Bauteil mit einer solchen Dichtfläche nach Anspruch 13, eine Vakuumkammer nach Anspruch 14 sowie ein Massenspektrometer mit einer solchen Vakuumkammer nach Anspruch 15.

Bei Hoch- oder Ultrahochvakuumbauteilen ist die Verwendung von Flanschen mit gedrehten Dichtflächen als sogenannte "Conflat-Flansche" (CF-Flansche) bekannt. Die Dichtflächen weisen dabei eine kreisförmig konzentrische Rillenstruktur auf. Als Dichtung zwischen zwei Dichtflächen werden bevorzugt Dichtringe oder Flachdichtungen aus Metall verwendet, welche die Rillen der Dichtflächen ausfüllen und dadurch eine zuverlässige Dichtung schaffen. Die verwendeten Flachdichtungen sind dabei zumeist aus Kupfer oder Aluminium gefertigt. Der Vorteil einer Metalldichtung ist, dass diese im Gegensatz zu Gummidichtungen nicht ausgasen. Insbesondere beim Einsatz in einem Massenspektrometer kann nämlich ein Ausgasen die Analytik stören und Messergebnisse verfälschen.

Die o.g. Rillenstruktur wird durch das Fertigungsverfahren des Drehens hergestellt. Daraus resultiert eine rotationssymmetrische Anordnung der Dichtflächen, welche folglich ringförmig ausgebildet sind. Dieses Bearbeitungsverfahren der Dichtflächen ist jedoch nachteilig, da dadurch keine nicht-ringförmigen Dichtflächen hergestellt werden können. So sind z.B. keine rechteckartigen Dichtflächen möglich. Die Verwendung von rechteckartigen Dichtflächen würde jedoch die Handhabung der Vakuumkammer, insbesondere beim Einsetzen von Bauteilen, z.B. Multipolen, erleichtern und insgesamt verbessern. So könnte z.B. anstatt einer runden Öffnung an der Grund- oder Deckfläche einer zylinderförmigen Vakuumkammer eine eckige Zylinderform für die Vakuumkammer verwendet werden, welche an einer Längsseite zu öffnen ist. Das Bauteil bzw. der Multipol könnte somit von der Längsseite aus in die Vakuumkammer eingebracht werden und müsste nicht durch die runde Öffnung der Grund- oder Deckfläche hineingeschoben werden.

Nicht-ringförmige Dichtflächen können zwar durch Fräsen hergestellt werden. Beim Fräsen entstehen jedoch sehr kleine Kanäle, welche die Dichtfläche von innen nach außen durchlaufen. Dadurch können Undichtigkeiten entstehen, welche insbesondere bei Hoch- bzw. Ultrahochvakuumbauteilen nachteilig sein können.

Die Aufgabe der Erfindung ist es daher, eine Dichtfläche bereitzustellen, welche auch nicht-kreisförmige bzw. nicht-ringförmige Formen aufweisen kann und mit geringem Aufwand herzustellen ist.

Die Erfindung löst diese Aufgabe durch eine Dichtfläche, welche umlaufende Riefen aufweist. Diese Riefen sind dabei mittels den Fertigungsverfahren Abtragen, Strahlspanen oder Eindrücken hergestellt. In der Messtechnik, insbesondere in der Einteilung der Gestaltabweichungen nach DIN 4760, werden die Oberflächenbeschaffenheiten kategorisiert. Die dritte Ordnung der Gestaltabweichung wird durch Rillen gebildet und die vierte Ordnung durch Riefen. Riefen sind dabei insgesamt kleinere Formabweichungen als Rillen. Durch die Rillen und Riefen in einer Oberfläche wird deren Rauheit bestimmt. Die Rauheit kann dabei z.B. durch die Rillen- bzw. Riefenbreite und die Rillen- bzw. Riefentiefe definiert werden. Als Riefen bezeichnet man also feine Rillen auf einer Oberfläche, welche insbesondere eine Schar von feinen, rillenförmigen Vertiefungen darstellen.

Die Riefen sind umlaufend auf der Dichtfläche angeordnet. Dies bedeutet insbesondere, dass die Riefen um die Öffnung in der Dichtfläche herumlaufen, also diese zumindest einmal umrunden. Das Fertigungsverfahren des Strahlspanens ist eine Untergruppe der Kategorie "Spanen mit geometrisch unbestimmter Schneide". Als Strahlspanen werden alle Fertigungsverfahren bezeichnet, bei denen die zerspanende Wirkung durch einen Hochdruckstrahl verursacht wird. Dieser Hochdruckstrahl kann dabei mit abrasiven Zusätzen versehen sein, insbesondere wenn die zu fertigenden Strukturen sehr fein ausfallen sollen. Das Fertigungsverfahren des Abtragens bezeichnet das nicht-mechanische Abtrennen von Stoffteilen. Das Abtragen kann dabei in thermisches, chemisches und elektrochemisches Abtragen eingeteilt werden. Das Fertigungsverfahren "Eindrücken" ist der Kategorie "Umformen" untergeordnet. Das Eindrücken findet daher unter Beibehaltung der Masse und des Stoffzusammenhangs statt.

Durch die umlaufenden Riefen werden die hohen Anforderungen an eine Dichtfläche, insbesondere für eine Vakuumkammer, erfüllt. Die entstehenden Kanäle sind durch das Umlaufen der Riefen parallel zur Außenseite der Dichtfläche angeordnet, was eine hohe Dichtwirkung erzielt. Durch die gewählten Fertigungsverfahren des Abtragens oder des Strahlspanens können dabei auch vorteilhaft nicht-ringförmige Dichtflächen mit Riefen versehen werden.

In einer bevorzugten Ausführungsform sind die Riefen konzentrisch oder spiralförmig ausgebildet. Insbesondere ist die konzentrische oder die spiralförmige Ausbildung nicht-kreisförmig. So können die Riefen als mehrere ineinander geschachtelte Rechtecke oder als eckige Spirale ausgebildet sein. Konzentrisch verlaufende Riefen haben dabei den Vorteil, dass Anfang und Ende der Riefen geschlossen sind und somit kein Zwischenraum entsteht, welcher die Wirkung der Dichtfläche beeinträchtigen könnte. Eine spiralförmige Ausbildung hat dagegen den Vorteil, dass das genutzte Werkzeug beim Ausbilden der Riefen nicht abgesetzt werden muss, so dass eine fortlaufende Vertiefung entsteht.

In einer bevorzugten Ausführungsform werden die Riefen mittels Laserschneiden, Ätzen, Wasserstrahlschneiden oder Elektroerosion hergestellt. Laserschneiden, Ätzen und Elektroerosion gehören dabei zum Fertigungsverfahren des Abtragens, während das Wasserstrahlschneiden in die Kategorie des Strahlspanens fällt. Mit allen der aufgezählten Fertigungsverfahren lassen sich sehr feine Strukturen im Bereich von 1 µm bis 1 mm herstellen. Als Verfahren des Wasserstrahlschneidens wird vorzugsweise das Mikrowasserstrahlschneiden angewendet. Besonders bevorzugt werden die Riefen mittels Laserschneiden hergestellt. Durch das Laserschneiden entstehen weitgehend nachbearbeitungsfreie Bauteile.

Wird das Verfahren der Elektroerosion verwendet, um konzentrische Riefen auszubilden, können kammartige Elektrodenspitzen eingesetzt werden. Dies ermöglicht eine gleichzeitige Ausbildung der Riefen, was eine Zeitersparnis bedeutet. Der Abstand der Elektrodenspitzen zueinander bestimmt dabei den Abstand der Riefen und kann eingestellt werden.

Alternativ werden die Riefen, z.B. mittels eines Körners, eingedrückt. Das Eindrücken bedeutet in diesem Zusammenhang nicht ein punktuelles Eindrücken bei senkrechter Druckausübung auf das Werkstück, sondern ein bei senkrechter Druckausübung gleichzeitiges Ziehen des Werkzeugs auf dem Werkstück entlang einer Linie, so dass die Riefen entstehen. Weiterhin alternativ kann das zu den graphischen Druckverfahren zählende Radieren eingesetzt werden, wobei der Verfahrensteil der normalerweise folgenden Drucktechnik entfällt. Dabei wird vorzugsweise ein spitzes Werkzeug genutzt, um die Riefen in die Dichtfläche zu ritzen. Beispielsweise kann ein solches Werkzeug ein Dorn, ein Stichel, eine Reißnadel, Radiernadel oder sonstige Nadel sein. Insbesondere bevorzugt ist die Spitze des Werkzeugs mit Diamanten oder Diamant-Splittern besetzt, bzw. die Diamant-Splitter sind in dem Werkzeug eingefasst. Alternativ kann bei Einsatz derartiger Werkzeuge Span entstehen, so dass das Verfahren dem Mikrozerspanen zugerechnet werden kann.

Bei der Bearbeitung von Stahl mit Diamantwerkzeugen leiden die Werkzeuge unter hohem Verschleiß aufgrund von chemischen Reaktionen. Vorzugsweise wird daher das Werkstück vor der Bearbeitung einer thermochemischen Randschichtbehandlung unterzogen, so dass der Verschleiß der Diamanten stark verringert wird.

In einer bevorzugten Ausführungsform weist die Dichtfläche durch die Riefen eine vorbestimmte Rauheit auf. Die Rauheit kann durch z.B. die Riefentiefe und die Riefenbreite definiert und eingestellt werden. Insbesondere wird die Rauheit über die Anwendungsweise des verwendeten Verfahrens eingestellt. Je nachdem, wie man das verwendete Werkzeug einstellt, ergeben sich unterschiedliche Strukturen der Riefen und damit eine unterschiedliche Rauheit. Beim Laserschneiden kann z.B. der Laserstrahl z.B. einen unterschiedlichen Durchmesser und/oder eine unterschiedliche Energie aufweisen, was zu unterschiedlichen Tiefen und Breiten der Riefen führt.

In einer bevorzugten Ausführungsform ist die Dichtfläche nicht-kreisförmig ausgebildet. Besonders bevorzugt ist die Dichtfläche eckig, insbesondere rechteckig, ausgebildet und weist dabei abgerundete Ecken auf. Die Riefen sind in der bevorzugten Ausführungsform analog zu der Dichtfläche nicht-kreisförmig ausgebildet. Besonders bevorzugt sind sie an die Form der Dichtfläche angepasst und sind daher besonders bevorzugt eckig, insbesondere rechteckig, umlaufend mit abgerundeten Ecken. Eine eckige Ausbildung der Dichtfläche und somit der Riefen vereinfacht die Handhabung beim Einsetzen und Herausnehmen eines Bauteils - wie z.B. eines Multipols - in bzw. aus der Vakuumkammer. Z.B. kann die Vakuumkammer dadurch in ihrer äußeren Form rechteckig zylindrisch sein, wodurch die eine Seite der Kammer, welche als Deckel ausgebildet ist, von oben an den Körper der Kammer angeschraubt werden kann. Die Verbindung ist dabei z.B. eine Flanschverbindung.

In einer bevorzugten Ausführungsform ist die Dichtfläche aus Metall hergestellt. Besonders bevorzugt wird als Dichtung dabei eine Metalldichtung verwendet. Dadurch, dass kein Gummi oder gummiartiges Material verwendet wird, kann kein Ausgasen stattfinden, welches die Messanalytik negativ beeinflussen könnte.

In einer weiteren bevorzugten Ausführungsform kann die Dichtfläche schräg angeordnet sein. Bevorzugt liegt dabei entweder die der Öffnung zugewandte Seite oder die der Flanschfläche zugewandte Seite tiefer als die jeweils gegenüberliegende Seite. Dadurch kann die Dichtung - z.B. ein Dichtring - beim Zusammenbringen der beiden Flanschflächen nicht wegrutschen und sich ideal bei Druck derart ausbreiten, dass eine sehr gute Abdichtung entsteht.

In einer weiteren bevorzugten Ausführungsform ist die Form der Riefen in ihrem Querschnitt variabel. Die Querschnittsform wird dabei u.a. durch das verwendete Werkzeug zur Ausbildung der Riefen bestimmt. Während durch Laser ausgebildete Riefen bevorzugt einen Querschnitt mit einer abgerundeten Form aufweisen, können mittels Ätzen z.B. auch rechteckige Querschnitte geschaffen werden. Mittels Senkerodieren können fast beliebige Formen geschaffen werden, je nachdem wie die eingesetzte Negativform ausgebildet ist.

Die Erfindung betrifft weiterhin ein Bauteil mit einer solchen Dichtfläche. Ein Bauteil kann z.B. der Körper einer Volumenkammer oder der Deckel einer Volumenkammer sein. Bevorzugt ist das Bauteil derart ausgebildet, dass es Bohrungen zum Anflanschen eines weiteren Bauteils aufweist. Zudem bezieht sich die Erfindung auf eine Vakuumkammer mit mindestens zwei Bauteilen. Bevorzugt wird dabei ein Innenraum durch Zusammenfügen der beiden Bauteile gegen die Umgebung abgedichtet. Besonders bevorzugt sind die zwei Bauteile als Körper einer Vakuumkammer und als Deckel einer Vakuumkammer ausgebildet und können insbesondere durch Flansche miteinander verbunden werden. Der Körper der Vakuumkammer umfasst dabei den abzudichtenden Innenraum. Ferner betrifft die Erfindung ein Massenspektrometer mit einer erfindungsgemäßen Vakuumkammer, welche mit einer erfindungsgemäßen Dichtfläche abgedichtet werden kann.

Weitere vorteilhafte Ausführungsformen ergeben sich aus den Unteransprüchen sowie aus den anhand der beigefügten Zeichnungen näher erläuterten Ausführungsbeispielen. In den Zeichnungen zeigen:
- Fig. 1: eine Draufsicht auf eine Flanschfläche nach einem ersten Ausführungsbeispiel der Erfindung,
- Fig. 2: eine Draufsicht auf eine Flanschfläche nach einem zweiten Ausführungsbeispiel der Erfindung und
- Fig. 3 bis 5: Seitenansichten einer erfindungsgemäßen Dichtfläche nach mehreren zueinander alternativen Ausführungsbeispielen der Erfindung, welche mit dem ersten und zweiten Ausführungsbeispiel kombiniert werden können.

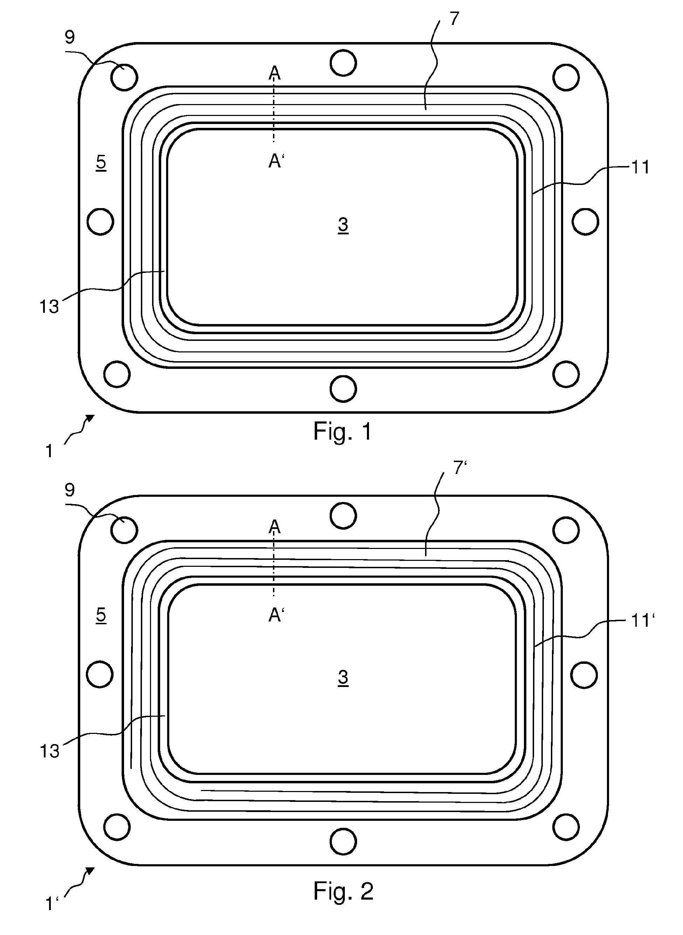

Fig. 1 zeigt eine Draufsicht einer Flanschfläche 1. Die Flanschfläche 1 gehört dabei zu dem Körper einer Vakuumkammer, welcher in das Bild (vom Betrachter weg) hineinragt. In der Mitte der Flanschfläche 1 befindet sich die Öffnung 3 der Vakuumkammer zum Innenraum. Die Flanschfläche 1 weist zudem eine Schraubfläche 5 und eine Dichtfläche 7 auf. Die Schraubfläche 5 ist am äußeren Rand der Flanschfläche 1 angeordnet und weist Bohrungen 9 auf. Mittels dieser Bohrungen 9 kann die Flanschfläche 1 mit einer weiteren Flanschfläche durch Zusammenschrauben verbunden werden. Die Dichtfläche 7 ist zwischen der Schraubfläche 5 und der Öffnung 3 angeordnet und weist konzentrisch umlaufende Riefen 11 auf. Die Anzahl der umlaufenden Riefen kann dabei variabel, je nach Anwendungszweck, gewählt werden. In der Öffnung 3 ist eine Stufe 13 angeordnet.

Im Ausführungsbeispiel der Fig. 1 ist die Flanschfläche 1 rechteckig dargestellt. Der Körper der Vakuumkammer ist daher vorzugsweise ebenfalls rechteckig ausgebildet. Die Ecken der Flanschfläche - und somit der äußeren Kanten der Vakuumkammer -, die Ecken der Schraubfläche 5, der Dichtfläche 7 und der Öffnung 3 sind dabei abgerundet. Dies ist vorteilhaft, da in Ecken bzw. an Ecken hohe innere Materialspannungen auftreten können, welche das Bauteil an diesen Stellen beschädigen könnten. Abgerundete Ecken hingegen wirken einer Konzentration von Spannungen an einzelnen Stellen entgegen, so dass geringere maximale Materialspannungen auftreten.

Fig. 2 zeigt eine Flanschfläche 1' mit einer Dichtfläche 7'. Die Dichtfläche 7' weist dabei Riefen 11' auf, welche spiralförmig auf der Dichtfläche 7' verlaufen. Die Spiralform der Riefen 11' ist dabei eckig ausgebildet. Jedoch sind auch hier wieder alle Ecken abgerundet ausgebildet, um eine Konzentration von Spannungen auf einem einzigen Punkt zu vermeiden. Die spiralförmige Anordnung der Riefen 11' bringt den Vorteil, dass das Werkzeug während des Herstellens der Riefen 11' nicht nach einer Umrundung abgesetzt werden muss. So kann z.B. ein Laserstrahl spiralförmig von außen nach innen oder von innen nach außen gemäß der Form der Dichtfläche auf der Dichtfläche entlang geführt werden.

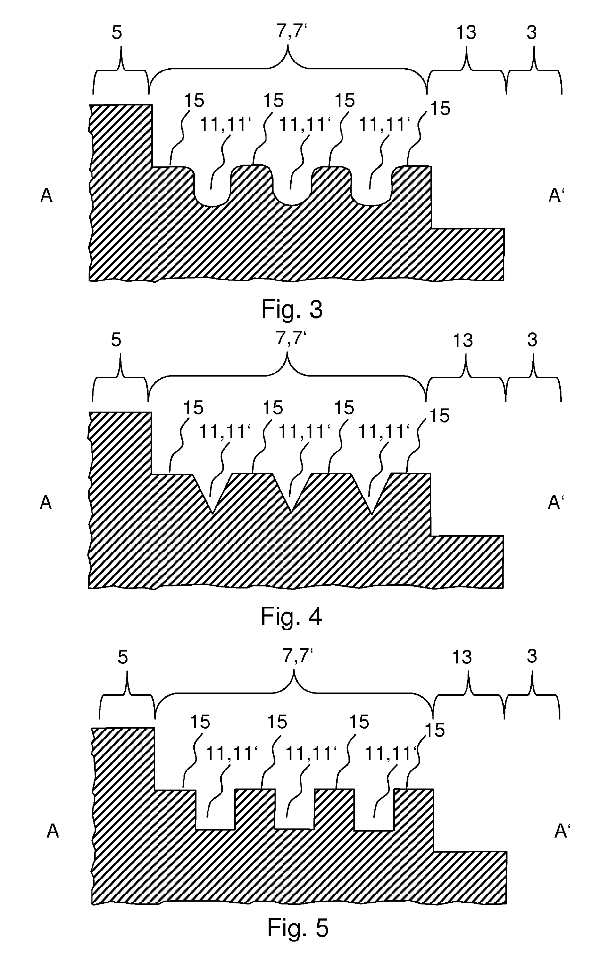

Die äußere Form der Flanschfläche 1 und 1' in Fig. 1 und 2 ist nicht auf die rechteckige Form beschränkt. Insbesondere können die Flanschflächen 1 und 1', die Schraubfläche 5, die Öffnung 3 und die Dichtflächen 7 und 7' alle Formen aufweisen, welche nicht kreisförmig sind. Z.B. kommt dabei eine quadratische Form oder eine ovale Form in Frage. Der Querschnitt der Dichtfläche 7, 7' ist je nach genutztem Werkzeug bzw. dessen Einstellung ausgebildet und kann z.B. die in den Fig. 3 bis 5 gezeigten Formen aufweisen.

Fig. 3 zeigt eine Seitenansicht bzw. einen Querschnitt der Dichtfläche 7, 7' durch den Schnitt A-A' in Fig. 1 oder Fig. 2. Die Dichtfläche 7, 7' kann dabei wie in Fig. 3 dargestellt ausgebildet sein. Die parallel zueinander verlaufenden Riefen 11, 11' sind dabei abgerundet ausgebildet, so dass sie in Form eines Bogens in die Oberfläche 15 der Dichtfläche 7, 7' hineinragen. Die Ausbildung der Riefen bestimmt sich dabei nach der Wahl und der Anwendungsweise des Fertigungsverfahrens. Die in Fig. 3 gezeigte Form kann beispielsweise mittels Laserschneiden hergestellt werden.

In Richtung der Außenseite der Vakuumkammer grenzt die Dichtfläche 7, 7' an die Schraubfläche 5. Zur anderen Seite, nämlich in Richtung der Öffnung 3, grenzt die Dichtfläche 7, 7' hingegen an die Stufe 13. Die Stufe 13 ist somit zwischen der Dichtfläche 7, 7' und der Öffnung 3 angeordnet.

Fig. 4 zeigt eine Seitenansicht der Dichtfläche 7, 7' mit einer alternativen Ausbildung der Riefen 11, 11'. Die Riefen sind dabei spitz ausgebildet, so dass sie in Form eines Dreiecks in die Oberfläche 15 der Dichtfläche 7, 7' hineinragen. Eine solche Form kann z.B. mittels Senkerodieren hergestellt werden. Bringt man eine Dichtung auf die Dichtfläche 7, 7' in Fig. 3 oder 4 auf, drückt sich die Dichtung, welche insbesondere aus Metall besteht, in die Riefen 11, 11' hinein, so dass die Riefen 11, 11' mit dem Material der Dichtung ausgefüllt werden. Dadurch ist die Vakuumkammer mittels der Dichtflächen 7, 7' verschlossen.

Fig. 5 zeigt eine weitere alternative Ausführungsform des Querschnitts der Riefen 11, 11'. Diese sind dabei als rechteckartige Vertiefungen in die Oberfläche 15 der Dichtfläche 7, 7' eingebracht. Diese Form kann z.B. durch Ätzen oder Elektroerosion hergestellt werden.

Die in Fig. 3, 4 und 5 gezeigten Ausführungsbeispiele zur Ausgestaltung der Riefen 11, 11' können beliebig mit der in Fig. 1 und 2 gezeigten Ausbildung der Riefen kombiniert werden. So können die Riefen z.B. spiralförmig ausgebildet sein und rechteckförmig in die Oberfläche 15 hineinragen. Alternativ verlaufen sie z.B. spiralförmig oder konzentrisch mit einer dreieckigen Vertiefung. Zudem sind die Formen der Vertiefung nicht auf die in den Figuren gezeigten Ausführungsformen beschränkt.

Alle in der vorstehenden Beschreibung und in den Ansprüchen genannten Merkmale sind sowohl einzeln als auch in beliebiger Kombination mit den Merkmalen der unabhängigen Ansprüche kombinierbar. Die Offenbarung der Erfindung ist somit nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Dichtfläche, insbesondere für eine Vakuumkammer,
**dadurch gekennzeichnet, dass**
die Dichtfläche (7, 7') umlaufende Riefen (11, 11') aufweist, welche mittels Abtragen, mittels Strahlspanen oder mittels Eindrücken hergestellt sind.

2. Dichtfläche nach Anspruch 1,
**dadurch gekennzeichnet, dass**
die Riefen (11, 11') konzentrisch oder spiralförmig ausgebildet sind.

3. Dichtfläche nach einem der Ansprüche 1 oder 2,
**dadurch gekennzeichnet, dass**
die Riefen (11, 11') mittels Laserschneiden, Ätzen, Wasserstrahlschneiden oder Elektroerosion hergestellt sind.

4. Dichtfläche nach einem der vorhergehenden Ansprüche,
**dadurch gekennzeichnet, dass**
die Dichtfläche (7, 7') durch die Riefen (11, 11') eine vorbestimmte Rauheit aufweist.

5. Dichtfläche nach einem der vorhergehenden Ansprüche,
**dadurch gekennzeichnet, dass**
die Dichtfläche (7, 7') und die Riefen (11, 11') nicht kreisförmig sind und insbesondere abgerundete Ecken aufweisen.

6. Dichtfläche nach einem der vorhergehenden Ansprüche,
**dadurch gekennzeichnet, dass**
die Dichtfläche (7, 7') aus Metall hergestellt ist.

7. Verfahren zur Herstellung einer Dichtfläche (7, 7'), insbesondere für eine Vakuumkammer,
**gekennzeichnet durch**
Herstellen von umlaufenden Riefen (11, 11') in der Dichtfläche mittels Abtragen, mittels Strahlspanen oder mittels Eindrücken.

8. Verfahren zur Herstellung nach Anspruch 7,
**dadurch gekennzeichnet, dass**
die Riefen (11, 11') konzentrisch oder spiralförmig ausgebildet werden.

9. Verfahren zur Herstellung nach einem der Ansprüche 7 oder 8,
**gekennzeichnet durch**
Herstellen der Riefen (11, 11') mittels Laserschneiden, Ätzen, Wasserstrahlschneiden oder Elektroerosion.

10. Verfahren zur Herstellung nach einem der Ansprüche 7 bis 9,
**gekennzeichnet durch**
Einstellen einer **durch** die Riefen (11, 11') vorbestimmten Rauheit der Dichtfläche (7, 7').

11. Verfahren zur Herstellung nach einem der Ansprüche 7 bis 10,
**dadurch gekennzeichnet, dass**
die Dichtfläche (7, 7') und die Riefen (11, 11') nicht kreisförmig ausgebildet werden, insbesondere derart ausgebildet werden, dass sie abgerundete Ecken aufweisen.

12. Verfahren zur Herstellung nach einem der Ansprüche 7 bis 11,
**dadurch gekennzeichnet, dass**
die Dichtfläche (7, 7') aus Metall hergestellt wird.

13. Bauteil mit einer Dichtfläche (7, 7') nach einem der Ansprüche 1 bis 6.

14. Vakuumkammer mit mindestens zwei Bauteilen nach Anspruch 13, welche zusammengefügt mittels der Dichtungen die Vakuumkammer abdichten.

15. Massenspektrometer mit einer Vakuumkammer nach Anspruch 14.
